# NEUE EUROPÄISCHE PATENTSCHRIFT

(11) **EP 1 876 048 B2**
(45) Veröffentlichungstag und Bekanntmachung des Hinweises auf die Entscheidung über den Einspruch: **18.07.2012**
(45) Hinweis auf die Patenterteilung: 28.10.2009
(21) Anmeldenummer: 07012273.4
(22) Anmeldetag: 22.06.2007
(51) Int. Cl.: B60J 10/00, E05F 15/00, H01H 3/14

(54) **Fingerschutzleiste, insbesondere für Aussen- und Innenschwenktüren**
Finger protection strip, in particular for indoor and outdoor swing doors
Baguette de protection de doigts, en particulier pour des portes basculant vers lýextérieur et lýintérieur

(30) Priorität: 08.07.2006 DE 202006010582 U
(43) Veröffentlichungstag der Anmeldung: 09.01.2008
(73) Patentinhaber: GUMMI-WELZ GmbH u. Co. KG GUMMI-KUNSTSTOFFTECHNIK-SCHAUMSTOFFE, 89231 Neu-Ulm (DE)
(72) Erfinder: Fritsche, Wolfgang, 89134 Blaustein (DE); Grein, Horst, 34637 Schrecksbach (DE); Schiffers, Herbert, Dr., 89275 Elchingen (DE)
(74) Vertreter: König, Beate

(56) Entgegenhaltungen:
- EP-A- 0 504 481
- EP-A- 0 767 475
- EP-A- 1 310 624
- EP-A1- 0 791 716
- EP-A2- 0 869 250
- EP-A2- 1 241 313
- EP-B1- 1 876 048
- WO-A1-96/04537
- DE-A1- 3 921 533
- DE-C1- 19 720 713
- DE-C1- 19 720 713
- DE-U1- 8 680 064
- DE-U1- 8 915 613
- DE-U1- 9 110 408
- DE-U1- 9 406 445
- DE-U1- 20 014 922
- DE-U1- 29 808 292
- DE-U1- 29 808 292
- US-A- 4 273 974
- US-B2- 7 373 754

## Beschreibung

Die Erfindung betrifft eine Fingerschutzleiste, insbesondere für Außen- und Innenschwenktüren, bestehend aus einer gummielastischen Profilleiste und einer in der Profilleiste angeordneten elektrischen Schaltleiste.

Gummielastische Dichtungen für Türen von Nutzfahrzeugen, insbesondere für die Personenbeförderung, haben neben üblichen technischen Anforderungen Sicherheitskriterien zu erfüllen. So muss es beispielsweise gewährleistet sein, dass die Hand einer Person zwischen sich schließende Türen und/oder den Türportal gelangt, ohne dass es zu einer Verletzung oder Personengefährdung kommt. Hieraus ergeben sich einerseits bestimmte notwendige Elastizitätseigenschaften wie Nachgiebigkeit der Dichtung in bestimmtem Umfang und andererseits das Erfordernis, dass die Türschließbewegung bei einem bestimmten Widerstand reversiert werden muss, d.h. dass sich die Tür notfalls wieder öffnen muss, um die eingeklemmte Hand oder dergleichen freizugeben. Außerdem muss, wenn sich die Tür beim Zustieg des Fahrgastes bereits schließt, der Kraftimpuls an der elektrischen Schaltleiste bewirken, dass der Schließvorgang abgebrochen wird und die Tür wieder in die geöffnete Stellung zurückkehrt. Auf diese Weise wird es vermieden, dass es überhaupt zu einem Einklemmereignis kommt.

An Türinnenkanten werden Fingerschutzleisten eingesetzt, die bei geringfügiger Druckbeaufschlagung ein Türreversierungssignal auslösen. Eine Fingerschutzleiste ist in der DE 10 2004 005 289 A beschrieben, die eine sich von der Stirnleiste fort erstreckende, dieser angeformte bewegliche Dichtlippe aufweist. Im Fuß- oder Anlagebereich der Dichtlippe ist eine elektrische Schaltleiste angeordnet. Auf die Dichtlippe ausgeübte Drehkräfte bewirken einen Schaltdruck auf die elektrische Schaltleiste und dieser löst dann jeweils einen Schaltimpuls aus.

Die DE 197 20 713 C1 offenbart eine gattungsgemäße Fingerschutzleiste mit einem für Autoschiebedächer konzipierten Dichtungsprofil, das ein flexibles Hohlprofil 11 mit zwei leitenden Kontaktelementen 15a, 15b einerseits und einer stirnseitigen Kontaktfläche 17 anderseits ist. Die beiden Kontaktelemente 15a, 15b sind flexibel seitlich einander gegenüberliegend angeordnet und ihnen gegenüber liegt wiederum die Kontaktfläche 17. Erfolgt eine Krafteinwirkung stirnseitg, dann kommt es einem Schließen der Kontakte 17 und 15a, 15b (Fig. 2). Gibt es seitliche bzw. schräg wirkende Kräfte, dann kommt es zur Berührung der Kontaktelemente 15a, 15b (Fig. 3 und 4). Der Kontaktort zwischen den Kontaktelementen bzw. der Kontaktfläche verschiebt sich somit abhängig von der Richtung der auf das Dichtungsprofil wirkenden Kräfte.

Gegenstand der EP 0 767 475 A2 ist ein Schnurschalter 10 mit Kontaktelementen 14, 20, wobei der Schnurschalter ohne Schalterbetätigung beweglich ist, andererseits auf Druckkraft hin auslöst.

Der Erfindung liegt die Aufgabe zugrunde, eine verbesserte Fingerschutzleiste zu schaffen, die bei aus verschiedenen Richtungen einwirkenden Kräften eine Deformation erfährt, welche einen Schaltvorgang auslösen kann.

Diese Aufgabe ist erfindungsgemäß bei einer Fingerschutzleiste mit den Merkmalen des Anspruchs 1 gelöst. Vorteilhafte Weitebildungen der erfindungsgemäßen Fingerschutzleiste sind Gegenstand der Unteransprüche.

Eine Fingerschutzleiste, insbesondere für Außen- und Innenschwenktüren, gemäß der Erfindung besteht somit aus einer gummielastischen Profilleiste und einer in der Profilleiste angeordneten elektrischen Schaltleiste. Die elektrische Schaltleiste ist nahe der Stirnseite der Profilleiste in einer von einer Stirnwand begrenzten Kammer angeordnet, wobei die Stirnwand mit ihr für eine Schaltauslösung in Eingriff bringbar ist. Die Stirnwand der Profilleiste ist flexibel mit einer konvexen Gestalt ausgebildet derart, dass sowohl eine auf die Stirnwand von vorne, als auch eine schräg von außen oder innen auf die Stirnwand gerichtete Kraft eine Deformation derselben zur Schaltleiste hin mit einer Schaltauslösung der elektrischen Schaltleiste bewirkt. Die von der Stirnwand begrenzte Kammer ist dreiteilig und besteht aus einer mittigen Hauptkammer sowie zwei benachbarten mit der Hauptkammer verbundenen Nebenkammern, die mit der Hauptkammer verbundene Hohlräume aufweisen. Die elektrische Schaltleiste ist der mittigen Hauptkammer angeordnet, und ist beidseits seitlich durch Rippen in ihrer Lage fixiert, wobei die Rippen jeweils im Bereich des Übergangs zu einer der Nebenkammern liegen, wobei bei Einwirken von Kräften von vorne und von seitlichen Kräften eine Verformung der Stirnwand und Kräftekonzentration im Bereich der mittigen Hauptkammer mit der Schaltleiste erzeugt wird.

Durch die Anordnung der elektrischen Schaltleiste nahe der Stirnseite oder dieser benachbart, wird erreicht, dass eine stirnseitig auf das Profil gerichtete Kraft zu einer Betätigung der elektrischen Schaltleiste und damit zur Auslösung des Reversierungssignals führt. Ebenso kommt es aufgrund der Deformation der Stirnwand bei einer seitlichen Kraftausübung auf die Innen- oder Außenwand der Profilleiste zu einer Deformation der Stirnwand und dann wiederum zu einer Betätigung der elektrischen Schaltleiste und damit Auslösung des Reversierungssignals. Die Winkel können bis zu 30 oder 45° von der Normalen der Innen- und Außenwand sein. So ist es möglich, mit nur einer in die Profilleiste integrierten elektrischen Schaltleiste zuverlässig eine Auslösung eines Reversierungssignals herbeizuführen.

Die Kammer ist dreiteilig, wobei die elektrische Schaltleiste ist der Hauptkammer angeordnet ist und ihr zwei Nebenkammern benachbart sind, die mit der Hauptkammer verbundene Hohlräume aufweisen. Dadurch ergibt sich eine vergrößerte Flexibilität der Profilleiste im Bereich der elektrischen Schaltleiste, die es ermöglicht, gerade beim Einwirken von seitlichen Kräften auf die Profilleiste im Stirnbereich z.B. die Kanten etwas einwärts zu drücken, wobei eine Verformung, wie z.B. ein Eindellen oder Einknicken, stirnseitig und damit wiederum eine Kräftekonzentration im Bereich der mittigen Hauptkammer mit der Schaltleiste erzeugt wird.

Dadurch, dass die elektrische Schaltleiste ist beidseits seitlich durch Rippen in ihrer Lage fixiert ist, wobei die Rippen jeweils im Bereich des Übergangs zu einer der Nebenkammern liegen, kann die elektrische Schaltleiste seitlich fixiert werden und so das Ansprechen der elektrischen Schaltleiste durch hohe Reproduzierbarkeit des Schaltvorgangs verbessert werden.

Der gummielastischen Profilleiste kann eine sich von dieser fort erstreckende, in zwei Richtungen bewegliche Dichtlippe gegebenenfalls asymmetrisch angeformt sein. Durch geeignete Gestaltgebung kann erreicht werden, dass auch eine Kraftausübung von außen auf die Dichtlippe, gegebenenfalls mit einer zur Stirnwand hinweisenden Komponente, eine Deformation der Profilstirnseite und so eine Auslösung der Schaltleiste mit nachfolgend ausgegebenem Reversierungssignal herbeiführt.

Ein leichtes Ansprechen wird unterstützt dadurch, dass die elektrische Schaltleiste in der der beweglichen Dichtlippe nächstgelegenen Kammer angeordnet ist. Eine Verformung der Stirnwand führt dann direkt zur Krafteinwirkung auf die Schaltleiste.

Bei einem vorteilhaften Ausführungsbeispiel der Erfindung ist die Kammer mit zur elektrischen Schaltleiste gerichteten Rippen für die Schaltauslösung versehen. Durch die Rippen wird eine Bündelung der auf die Profilleiste ausgeübten Kraft ausgeübt, so dass diese im wesentlichen auf die Schaltleiste zur Ausgabe eines Schaltsignals gerichtet wird.

Bei einem bevorzugten Ausführungsbeispiel der Erfindung ist die der Außenwand mit der beweglichen Dichtlippe gegenüberliegende Innenwand im Übergang zur Stirnwand abgeschrägt ausgebildet. Hiermit wird der durch eine schräg von innen auf die Profilleiste im Stirnbereich ausgeübte Kraft auf den mittleren bis inneren Bereich der elektrischen Schaltleiste ausgeübte Druck gebündelt und eine leichte Schaltauslösung unterstützt.

Die der Außenwand mit der beweglichen Dichtlippe gegenüberliegende Innenwand kann im Übergang zur Stirnwand eine geringere Dicke aufweisen, womit ebenfalls eine Schaltauslösung durch eine schräg von innen auf die Stirnwand ausgeübte Kraft unterstützt wird.

Wenn die Gestalt der Stirnwand konvex ist, ermöglicht die resultierende Vorspannung der Profilleiste eine in Richtung der Kammer mit der Schaltleiste konzentrierte Kraftausübung, die ein leichtes Auslösen des Schaltsignals begünstigt.

Vorzugsweise weist die Profilleiste eine kreisförmige Mittelkammer auf. Hierdurch erfährt das Gesamtdichtungsprofil eine symmetrisch stabile Ausgestaltung als Widerlager zur beweglichen Ausführung des Stirnbereichs.

Eine erhöhte Stabilität des Gegenlagers ergibt sich auch, wenn die Wände der Mittelkammer und/oder die dieser benachbarten Wände und Stege verstärkt oder mit größerer Dicke ausgeführt sind.

Zweckmäßig ist das Gegenlager der elektrischen Schaltleiste im Vergleich zur Stirnwand der Profilleiste massiv ausgeführt.

Die Erfindung wird im folgenden weiter anhand von Ausführungsbeispielen und der Zeichnung beschrieben. Diese Darstellung dient lediglich zur Veranschaulichungszwecken und soll die Erfindung nicht auf die konkret angegebenen Merkmalskombinationen einschränken. Es zeigt:

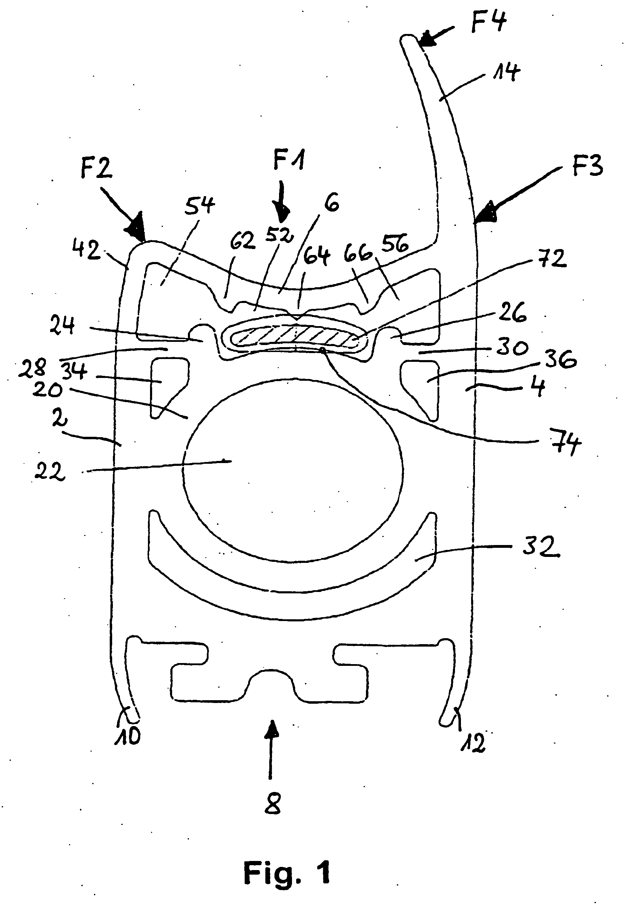

- Fig. 1: eine schematische Schnittansicht eines Profils gemäß einem Ausführungsbeispiel der erfindungsgemäßen Fingerschutzleiste.

Eine in Fig. 1 dargestellte erfindungsgemäße Dichtung umfaßt eine Innen-, Außen- und Stirnwand 2, 4, 6 sowie einen Dichtungsfuß 8. Die Innenwand 2 und die Außenwand 4 gehen jeweils in der Verlängerung im Bereich des als Montageleiste stabil ausgebildeten Dichtungsfußes rückwärts in eine Innenlippe 10 bzw. Außenlippe 12 über. Die Außenwand weist eine vordere Verlängerung in Form einer Dichtlippe 14 auf, die in zwei Richtungen beweglich ist und zu ihrem vorderen Ende hin verjüngt ausgebildet ist. Die asymmetrische Anordnung der Dichtlippe 14 ermöglicht eine asymmetrische Beweglichkeit der Dichtlippe 14 und damit ist diese außerordentlich geeignet für den Einsatz bei Fahrzeugdoppeltüren.

Im Inneren der Profilleiste befindet sich eine kreisförmige Mittelkammer 22, deren Begrenzungswände 20 durch zwei verstärkte Rippen 24, 26 und Stege 28, 30 stabilisiert sind und außerdem jeweils auf der Profilseite in die Innenwand 2 und die Außenwand 4 übergehen, wodurch sich ebenfalls eine Abstützung ergibt. Auf der Fußseite der Mittelkammer 22 befindet sich eine konzentrische bogenförmig ausgeführte Kammer 32 und umgrenzt von den Stegen 28 bzw. 30, den Rippen 24, 26, den Wänden 2, 4 und der Begrenzungswand 20 sind jeweils kleinere Kammern 34, 36 vorgesehen.

Die Stirnwand 6 weist konvexe Gestalt auf und hat zugleich eine geringere Wandstärke als die Innen- und die Außenwand 2, 4. Der stirnseitige Endabschnitt 42 der Innenwand 2 verläuft schräg einwärts, d.h. er ist abgeschrägt. Durch diese Maßnahmen ergibt sich einerseits eine Vorspannung in der Stirnwand 6 und andererseits eine leichte Verformbarkeit derselben bei Ausübung einer stauchenden Kraft von vorne (F1), schräg von innen vorne (F2) und schräg von außen vorne (F3), ferner auch bei Ausübung einer einwärts gerichteten Kraft beispielsweise auf das vordere Ende der Dichtlippe (F4).

Seitlich begrenzt durch die Innen- und Außenwand 2, 4 einerseits und stirnseitig durch die Stirnwand 6 und auf der anderen Seite durch die Wand 20 der Mittelkammer 22 erstreckt sich eine dreiteilige Kammer, bestehend aus einer Hauptkammer 52 und zwei benachbarten Nebenkammern 54, 56, die miteinander verbunden sind. Die beiden verstärkten Rippen 24, 26 befinden sich jeweils am Übergang zwischen der Haupt- und den Nebenkammern. Etwas einwärts, aber im wesentlichen gegenüberliegend den verstärkten Rippen 24, 26 sowie mittig weist die Stirnwand 6 Innenrippen 62, 64, 66 auf.

Im Inneren der Hauptkammer 52 befindet sich eine elektrische Schaltleiste 72. Seitlich ist die Schaltleiste 72 durch die verstärkten Rippen 24, 26 begrenzt und so in ihrer Position fixiert. Stirnseitig liegt die Innenrippe 64 an ihr an. Die Innenrippen 62, 66 sind frei, können aber durch Krafteinwirkung von außen mit Deformation der Stirnwand 6 ebenfalls mit der elektrischen Schaltleiste 72 in Eingriff treten. Gegenüber liegt die elektrische Schaltleiste 72 an der Außenfläche 74 der Wand 20 an.

Die bereits erwähnten, in Fig. 1 eingezeichneten Pfeile veranschaulichen die Funktion der erfindungsgemäßen Fingerschutzleiste. Die Geometrie der Stirnwand 6, ferner das Vorhandensein der Kammeranordnung 52, 54, 56 ermöglichen eine Verformung der Stirnwand 6 derart, daß sich eine direkte Übertragung der auf die Profilleiste ausgeübten Kraft auf die elektrische Schaltleiste 72 ergibt. Dann wird ein Schaltimpuls in dem nachgeordneten Drucksensor ausgelöst.

Das rasche Ansprechen der elektrischen Schaltleiste 72 beruht insbesondere auf der relativ großen Steifigkeit des Gegenlagers 24, 26, 12, 20 der Schaltleiste 72, wodurch es zu einer praktisch direkten Kraftübertragung und damit nur wenigen Millimetern Schaltweg kommt.

## Patentansprüche

1. Fingerschutzleiste, insbesondere für Außen- und Innenschwenktüren, bestehend aus einer gummielastischen Profilleiste und einer in der Profilleiste angeordneten elektrischen Schaltleiste, wobei
die elektrische Schaltleiste (72) nahe der Stirnseite der Profilleiste in einer von einer Stirnwand (6) begrenzten Kammer (52) angeordnet ist,
die Stirnwand (6) mit der elektrischen Schaltleiste (72) für eine Schaltauslösung in Eingriff bringbar ist und die Stirnwand (6) der Profilleiste flexibel mit einer Gestalt ausgebildet ist derart, dass sowohl eine auf die Stirnwand (6) von vorne, als auch eine schräg von außen oder innen auf die Stirnwand gerichtete Kraft eine Deformation derselben zur Schaltleiste (72) hin mit einer Schaltauslösung der elektrischen Schaltleiste bewirkt,
**dadurch gekennzeichnet, dass**
die von der Stirnwand begrenzte Kammer dreiteilig ist und aus einer mittigen Hauptkammer (52) sowie zwei benachbarten mit der Hauptkammer verbundenen Nebenkammern (54, 56) besteht, die mit der Hauptkammer (52) verbundene Hohlräume aufweisen, und
die elektrische Schaltleiste (72) in der mittigen Hauptkammer (52) angeordnet ist, und die elektrische Schaltleiste (72) beidseits seitlich durch Rippen (24, 26) in ihrer Lage fixiert ist, wobei die Rippen (24, 26) jeweils im Bereich des Übergangs zu einer der Nebenkammern (54, 56) liegen und die Gestalt der Stirnwand (6) konvex ist,
wobei bei Einwirken von Kräften von vorne und von seitlichen Kräften eine Verformung der Stirnwand (6) und Kräftekonzentration im Bereich der mittigen Hauptkammer mit der Schaltleiste erzeugt wird.

2. Fingerschutzleiste nach Anspruch 1, **dadurch gekennzeichnet, dass** der gummielastischen Profilleiste eine sich von dieser fort erstreckende, in zwei Richtungen bewegliche Dichtlippe (14) angeformt ist.

3. Fingerschutzleiste nach Anspruch 1 oder 2, **dadurch gekennzeichnet, dass** die Dichtlippe (14) asymmetrisch angeformt ist.

4. Fingerschutzleiste nach einem der Ansprüche 1 bis 3, **dadurch gekennzeichnet, dass** die elektrische Schaltleiste (72) in der der beweglichen Dichtlippe nächstgelegenen Kammer (52) angeordnet ist.

5. Fingerschutzleiste nach einem der Ansprüche 1 bis 4, **dadurch gekennzeichnet, dass** die Kammer (52) mit zur elektrischen Schaltleiste (72) gerichteten Rippen (62, 64, 66) für die Schaltauslösung versehen ist.

6. Fingerschutzleiste nach einem der Ansprüche 1 bis 5, **dadurch gekennzeichnet, dass** die der Außenwand (4) mit der beweglichen Dichtlippe (14) gegenüberliegende Innenwand (2) im Übergang (42) zur Stirnwand (6) abgeschrägt ausgebildet ist, womit eine Schaltauslösung durch eine schräg von innen auf die Stirnwand (6) ausgeübte Kraft unterstützt wird.

7. Fingerschutzleiste nach einem der Ansprüche 1 bis 6, **dadurch gekennzeichnet, dass** die der Außenwand (4) mit der beweglichen Dichtlippe (14) gegenüberliegende Innenwand (2) im Übergang zur Stirnwand (6) eine geringere Dicke aufweist, womit eine Schaltauslösung durch eine schräg von innen auf die Stirnwand (6) ausgeübte Kraft unterstützt wird.

8. Fingerschutzleiste nach einem der Ansprüche 1 bis 7, **dadurch gekennzeichnet, dass** die Profilleiste eine kreisförmige Mittelkammer (22) aufweist.

9. Fingerschutzleiste nach einem der Ansprüche 1 bis 8, **dadurch gekennzeichnet, dass** die Wände (20) der Mittelkammer (22) und/oder die dieser benachbarten Wände und Stege verstärkt oder mit größerer Dicke als die Außenwände (6, 42) der Kammer (52) ausgeführt sind.

10. Fingerschutzleiste nach einem der Ansprüche 1 bis 9, **dadurch gekennzeichnet, dass** das Gegenlager (24, 26, 12, 20) der elektrischen Schaltleiste (72) im Vergleich zur Stirnwand (6) der Profilleiste massiv ausgeführt ist.

## Claims

1. Finger protection strip, in particular for externally and internally swinging doors, consisting of a rubber-elastic profile strip and an electrical safety strip disposed in the profile strip, wherein
the electrical safety strip (72) is disposed in proximity to the end side of the profile strip in a chamber (52) which is defined by an end wall (6),
the end wall (6) can be brought into engagement with the electrical safety strip (72) for a switching activation, and the end wall (6) of the profile strip is formed in a flexible manner with a shape such that both a force which is directed onto the end wall (6) from the front and a force which is directed onto the end wall in an inclined manner from the outside or from the inside causes a deformation thereof towards the safety strip (72) and a switching activation of the electrical safety strip,
**characterised in that**
the chamber which is defined by the end wall is tripartite and consists of a central main chamber (52) and two adjacent auxiliary chambers (54, 56) which are connected to the main chamber and which comprise hollow spaces which are connected to the main chamber (52), and
the electrical safety strip (72) is disposed in the central main chamber (52), and the electrical safety strip (72) is fixed in position on both sides in a lateral manner by means of ribs (24, 26), wherein the ribs (24, 26) lie in each case in the region of the transition to one of the auxiliary chambers (54, 56), and
the shape of the end wall (6) is convex,
wherein in the event of forces acting from the front and in the event of lateral forces a deformation of the end wall (6) and a force concentration is produced in the region of the central main chamber with the safety strip.

2. Finger protection strip as claimed in claim 1, **characterised in that** integrally formed on the rubber-elastic profile strip is a sealing lip (14) which extends away therefrom and is movable in two directions.

3. Finger protection strip as claimed in claim 1 or 2, **characterised in that** the sealing lip (14) is integrally formed in an asymmetrical manner.

4. Finger protection strip as claimed in any one of claims 1 to 3, **characterised in that** the electrical safety strip (72) is disposed in the chamber (52) located in closest proximity to the movable sealing lip.

5. Finger protection strip as claimed in any one of claims 1 to 4, **characterised in that** the chamber (52) is provided with ribs (62, 64, 66), which are directed towards the electrical safety strip (72), for the switching activation.

6. Finger protection strip as claimed in any one of claims 1 to 5, **characterised in that** the inner wall (2) lying opposite the outer wall (4) with the movable sealing lip (14) is formed in a chamfered manner in the transition (42) to the end wall (6), whereby a switching activation is assisted by a force which is exerted upon the end wall (6) in an inclined manner from the inside.

7. Finger protection strip as claimed in any one of claims 1 to 6, **characterised in that** the inner wall (2) lying opposite the outer wall (4) with the movable sealing lip (14) has a smaller thickness in the transition to the end wall (6), whereby a switching activation is assisted by means of a force exerted upon the end wall (6) in an inclined manner from the inside.

8. Finger protection strip as claimed in any one of claims 1 to 7, **characterised in that** the profile strip comprises a circular central chamber (22).

9. Finger protection strip as claimed in any one of claims 1 to 8, **characterised in that** the walls (20) of the central chamber (22) and/or the walls and webs adjacent thereto are reinforced or formed with a greater thickness than the outer walls (6, 42) of the chamber (52).

10. Finger protection strip as claimed in any one of claims 1 to 9, **characterised in that** the counter bearing (24, 26, 12, 20) of the electrical safety strip (72) is sturdy in formation in comparison with the end wall (6) of the profile strip.

## Revendications

1. Rebord anti-pince doigt, en particulier pour des portes pivotantes extérieures et intérieures, formé par un rebord profilé ayant l'élasticité du caoutchouc et par une barrette de contact électrique agencée dans le rebord profilé,
la barrette de contact (72) étant agencée à proximité de la face frontale du rebord profilé dans une chambre (52) délimitée par une paroi frontale (6),
la paroi frontale (6) pouvant être amenée en prise avec la barrette de contact (72) électrique pour déclencher une commutation, et la paroi frontale (6) du rebord profilé étant réalisée de manière flexible avec une forme telle que tant une force appliquée de l'avant sur la paroi frontale (6) qu'une force appliquée en oblique de l'extérieur ou de l'intérieur sur la paroi frontale génèrent une déformation de cette dernière vers la barrette de contact (72), laquelle déclenche une commutation de la barrette de contact,
**caractérisé en ce que**
la chambre délimitée par la paroi frontale est en trois parties et est formée par une chambre principale (52) centrale, ainsi que par deux chambres annexes (54, 56) adjacentes, reliées à la chambre principale et comportant des cavités reliées à la chambre principale (52), et
la barrette de contact (72) électrique est agencée dans la chambre principale (52) centrale, et la barrette de contact (72) électrique, sur les deux côtés latéraux, est immobilisée dans sa position par des nervures (24, 26), lesdites nervures (24, 26) étant situées respectivement dans la zone de transition vers l'une des chambres annexes (54, 56) et
la paroi frontale (6) a une forme convexe,
sachant que, sous l'effet de forces exercées de l'avant et sous l'effet de forces latérales, il se produit une déformation de la paroi frontale (6) et une concentration des forces dans la zone de la chambre principale centrale avec la barrette de contact.

2. Rebord anti-pince doigt selon la revendication 1, **caractérisé en ce que** sur le rebord profilé ayant l'élasticité du caoutchouc est formée une lèvre d'étanchéité (14) orientée en s'écartant de celui-ci et mobile dans deux directions.

3. Rebord anti-pince doigt selon la revendication 1 ou 2, **caractérisé en ce que** la lèvre d'étanchéité (14) est formée asymétriquement sur ledit rebord profilé.

4. Rebord anti-pince doigt selon l'une quelconque des revendications 1 à 3, **caractérisé en ce que** la barrette de contact (72) électrique est agencée dans la chambre (52) la plus proche de la lèvre d'étanchéité mobile.

5. Rebord anti-pince doigt selon l'une quelconque des revendications 1 à 4, **caractérisé en ce que** la chambre (52) est munie de nervures (62, 64, 66), orientées vers la barrette de contact (72) électrique, en vue de déclencher une commutation.

6. Rebord anti-pince doigt selon l'une quelconque des revendications 1 à 5, **caractérisé en ce que** la paroi intérieure (2), opposée à la paroi extérieure (4) avec la lèvre d'étanchéité (14) mobile, est réalisée avec un chanfrein dans la zone de transition (42) vers la paroi frontale (6), une commutation étant portée par une force exercée en biais de l'intérieur sur la paroi frontale (6).

7. Rebord anti-pince doigt selon l'une quelconque des revendications 1 à 6, **caractérisé en ce que** la paroi intérieure (2), opposée à la paroi extérieure (4) avec la lèvre d'étanchéité (14) mobile, a une plus faible épaisseur dans la zone de transition vers la paroi frontale (6), moyennant quoi une commutation est portée par une force exercée en biais de l'intérieur sur la paroi frontale (6).

8. Rebord anti-pince doigt selon l'une quelconque des revendications 1 à 7, **caractérisé en ce que** le rebord profilé comporte une chambre centrale (22) circulaire.

9. Rebord anti-pince doigt selon l'une quelconque des revendications 1 à 8, **caractérisé en ce que** les parois (20) de la chambre centrale (22) et/ou les parois et nervures adjacentes à celle-ci sont réalisées de manière renforcée ou avec une épaisseur supérieure à celle des parois extérieures (6, 42) de la chambre (52).

10. Rebord anti-pince doigt selon l'une quelconque des revendications 1 à 9, **caractérisé en ce que** la contre-butée (24, 26, 12, 20) de la barrette de contact (72) électrique est réalisée massive par rapport à la paroi frontale (6) du rebord profilé.
